Europäisches Patentamt

European Patent Office

Office européen des brevets

(19)

(11) Veröffentlichungsnummer: **0 260 480**

**A1**

(12) **EUROPÄISCHE PATENTANMELDUNG**

(21) Anmeldenummer: 87112264.4

(22) Anmeldetag: 24.08.87

(51) Int. Cl.4: **A01G 9/14** , A01G 9/22

(30) Priorität: 18.09.86 IT 6771086

(43) Veröffentlichungstag der Anmeldung:
23.03.88 Patentblatt 88/12

(84) Benannte Vertragsstaaten:
**DE ES FR GR NL**

(71) Anmelder: **Siri, Bruno**
**Via Aurelia 25**
**I-18015 Riva Ligure (Imperia)(IT)**

Anmelder: **Colombo Siri, Ornella**
**Via Aurelia 25**
**I-18015 Riva Ligure (Imperia)(IT)**

Anmelder: **Siri, Sergio**
**Via Aurelia 25**
**I-18015 Riva Ligure (Imperia)(IT)**

(72) Erfinder: **Siri, Bruno**
**Via Aurelia 25**
**I-18015 Riva Ligure (Imperia)(IT)**

(74) Vertreter: **Aprá, Andrea, Dipl.-Ing. Dr. jur. et al**
**Via Cernaia 27**
**I-10121 Torino(IT)**

(54) **Treibhaus.**

(57) Gegenstand der Erfindung ist ein Treibhaus, dessen Abdeckung (20) aus einer Mehrzahl von Druckluftschläuchen (21), aus verschiebbaren Aufhängemitteln (23) und aus Mitteln (30) zum Verstellen der Druckluftschläuche (21) gegenüber Tragelementen (13), die am Aufbaugerippe (10) des Treibhauses fest angeordnet sind, sowie aus Mitteln (40) zum Aufpumpen der Druckluftschläuche (21) derart, dass die Druckluftschläuche (21) unter Verschiebung gegenüber den Tragelementen (13) eine entfaltete Stellung zum Abdecken des Treibhauses einnehmen können, sobald sie durch die erwähnten Mittel (40) aufgepumpt sind, während sie im entlüfteten Zustand in eine Mindestraumbedarfsanordnung und Offenstellung des Treibhauses zusammenfaltbar sind.

EP 0 260 480 A1

Fig. 2

# Treibhaus

Vorliegende Erfindung hat ein Treibhaus zum Gegenstand.

Aufgabe der Erfindung ist es, ein Treibhaus vorzusehen, das eine hohe Wärmedämmzahl sicherstellt, bei Bedarf aber auch eine wirksame Belüftung des Innenraums des Treibhauses zulässt.

Das Treibhaus gemäss der Erfindung soll ausserdem derart aufgebaut sein, dass die Elemente für die Abdeckung des Treibhauses verhältnismässig leicht in eine Abdeckstellung entfaltet und bei Bedarf auf dieser Abdeckstellung wieder teilweise oder ganz in eine Offenstellung zusammengefaltet werden können.

Darüber hinaus soll das Treibhaus auf gross bemessenen und auch auf unebenen Bodenflächen aufstellbar sein.

Weiterhin soll das Treibhaus kostenmässig günstig sowie leicht und schnell aufstellbar sein und eine hohe Zuverlässigkeit aufweisen.

Diese Aufgaben sind durch ein Treibhaus erfindungsgemäss dadurch gelöst, dass die Abdeckung des Treibhauses aus einer Mehrzahl von Druckluftschläuchen, aus gegen-über an dem Aufbaugerippe des Treibhauses fest angeordneten Tragelementen verschiebbaren Mitteln zum Aufhängen der Druckluftschläuche und aus Mitteln zum Aufpumpen der Druckluftschläuche besteht, wobei diese Schläuche unter Verschiebung gegenüber den erwähnten Tragelementen in eine Stellung der Abdeckung des Treibhauses entfaltet werden können, in der sie durch die erwähnten Mittel aufgepumpt sind, während sie bei Bedarf im entlüfteten Zustand eine Mindestraumbedarfanordnung und Offenstellung des Treibhauses zusammenfaltbar sind.

Verschiebbar sind die Druckluftschläuche gegenüber den fest angeordneten Tragelementen in vorteilhafter Weise durch Mittel zum Verstellen bzw. Feststellen der Druckluftschläuche in einer entfalteten Abdeckstellung für das Treibhaus bzw. in einer zusammengefalteten Mindestraumbedarfanordnung und Offenstellung.

Im Folgenden wird anhand der Zeichnung ein Ausführungsbeispiel der Erfindung näher beschrieben. Es zeigen:

Fig. 1 ein schematisches Schaubild des Aufbaugerippes eines erfindungsgemässen Treibhauses,

Fig. 2 ein schematisches Schaubild des Treibhauses mit den Druckluftschläuchen im aufgepumpten Abdeckzustand,

Fig. 3 im vergrösserten Masstab die Einzelheit III der Fig. 2 mit der Antriebswelle für die Mittel zum Verstellen der Druckluftschläuche gegenüber den Tragmitteln der Treibhausbadeckung,

Fig. 4 ein zu Fig. 2 analoges Schaubild, worin jedoch das Treibhaus mit zum teilweisen Öffnen der Abdeckung entlüfteten und gefalteten Druckluftschläuchen dargestellt ist,

Fig. 5 ein der Fig. 4 ähnliches Schaubild, worin jedoch auch Schutzmittel für die vollständig zusammengefalteten, einen Mindestraum einnehmenden Druckluftschläuche der Treibhausabdeckung dargestellt sind,

Fig. 6 eine schematische Teilansicht in vergrössertem Masstab der Abdeckung des Treibhauses gemäss der Einzelheit VI in Fig. 2,

Fig. 7 eine schematische Teilansicht in vergrössertem Masstab der Mittel zum Verstellen der Druckluftschläuche gegenüber den Tragelementen der Treibhausabdeckung,

Fig. 8 eine Einzelansicht in vergrössertem Masstab und im Schnitt gemäss der Linie VIII-VIII in Fig. 2 eines Teiles der Aufpumpmittel für die Druckluftschläuche der Treibhausabdeckung, und

Fig. 9 eine perspektive Ansicht in vergrössertem Massstab eines der zum Verstellung der Druckluftschläuche gegenüber den Tragelementen verschiebbaren Aufhängungsmittel.

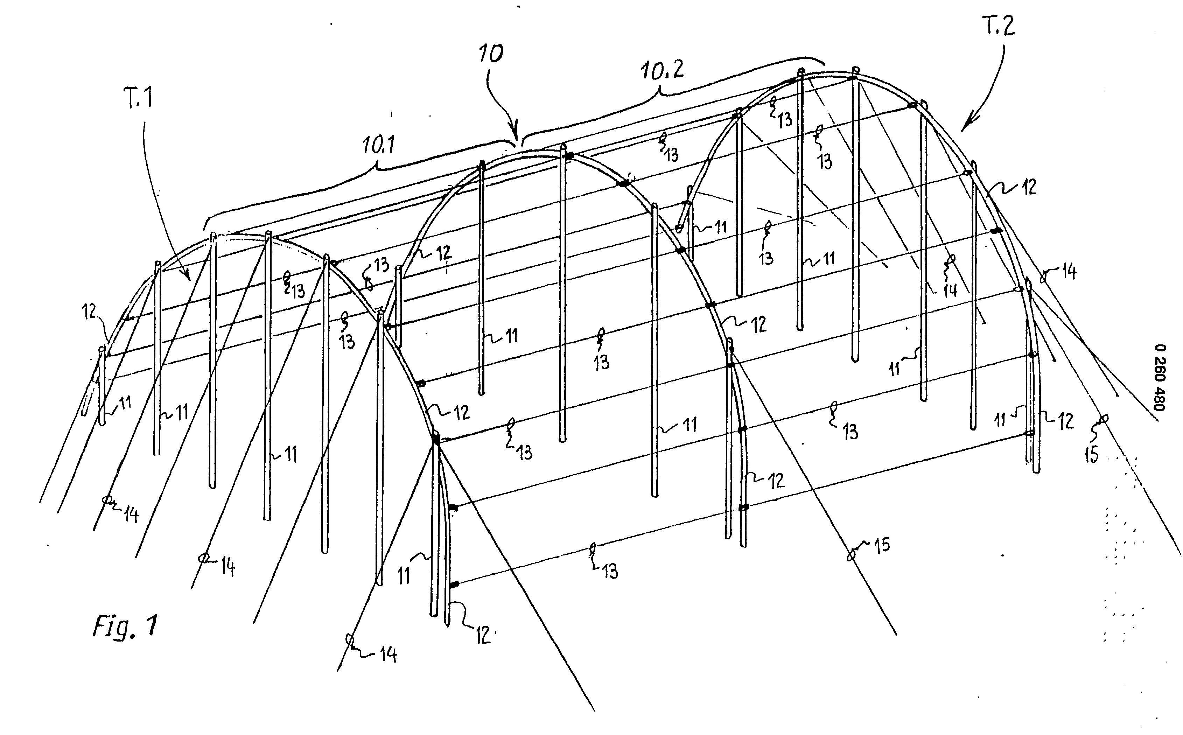

In Fig. 1 bezeichnet 10 allgemein das Aufbaugerippe des erfindungsgemässen Treibhauses, wobei im dargestellten Ausführungsbeispiel dieses Gerippe die Form eines Tonnengewölbes, das in Längsrichtung in zwei Abschnitte 10.1 und 10.2 gleicher Erstreckung unterteilt ist, aufweist. Das Aufbaugerippe 10 umfasst vertikale Stützen 11, z.B. in den Boden eingerammte kräftige Metallrohre, die in drei Querreihen angeordnet sind und mit deren oberen freien Enden je Reihe ein Querbogen 12 z.B. aus Metallrohr befestigt ist.

Stärke längs verlaufende Seile 13 z.B. aus Metall sind zwischen den Querbögen 12 gespannt und an diesen befestigt und dienen, wie noch weiter unten beschrieben wird, als Tragelemente für die Abdeckung des Treibhases und zugleich als Verspannungselemente für das Aufbaugerippe 10 des Treibhauses. Diese Tragseile 13 sind mittels Verankerungsseile 14, z.B. ebenfalls aus Metall, unter Spannung gehalten, wobei die Verankerungsseile selbst zwischen den Stützen 11 der vorderen und der hinteren Kopfseite T.1 und T.2 des Treibhauses und entsprechenden in den Boden versenkten Verankerungsblöcken aus Betonstein gespannt sind. Zur Stabilisierung des Aufbaugerippes 10 tragen ausserdem Verankerungsseile 15, ebenfalls z.B. aus Metall, bei, die zwischen den äusseren Stützen 11 jeder Querreihe und entsprechenden in den Boden versenkten Verankerungsblöcken gespannt sind.

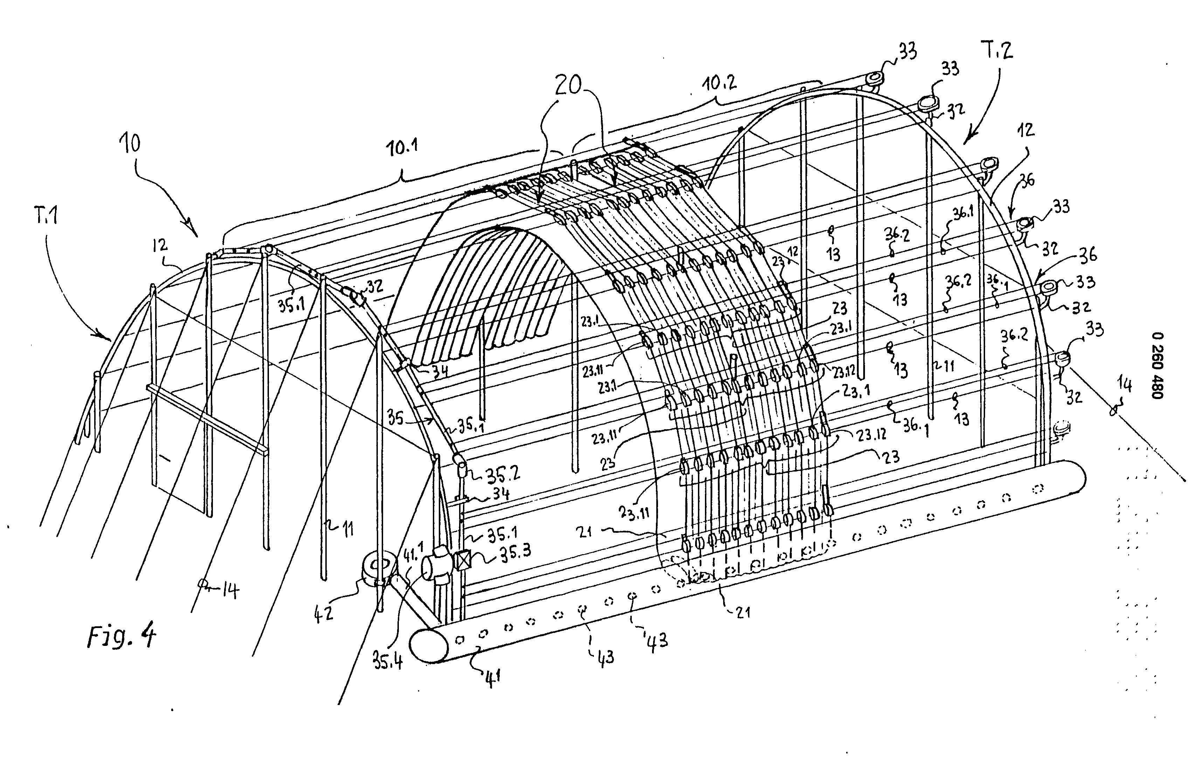

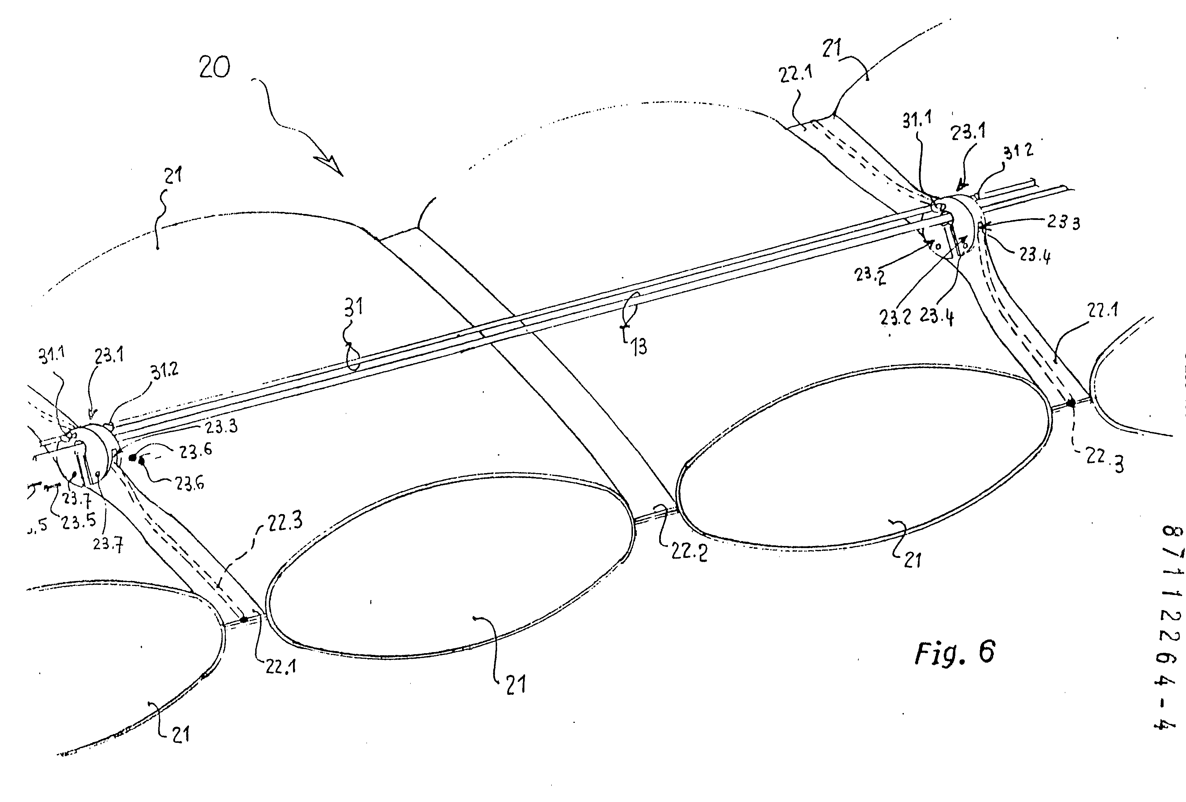

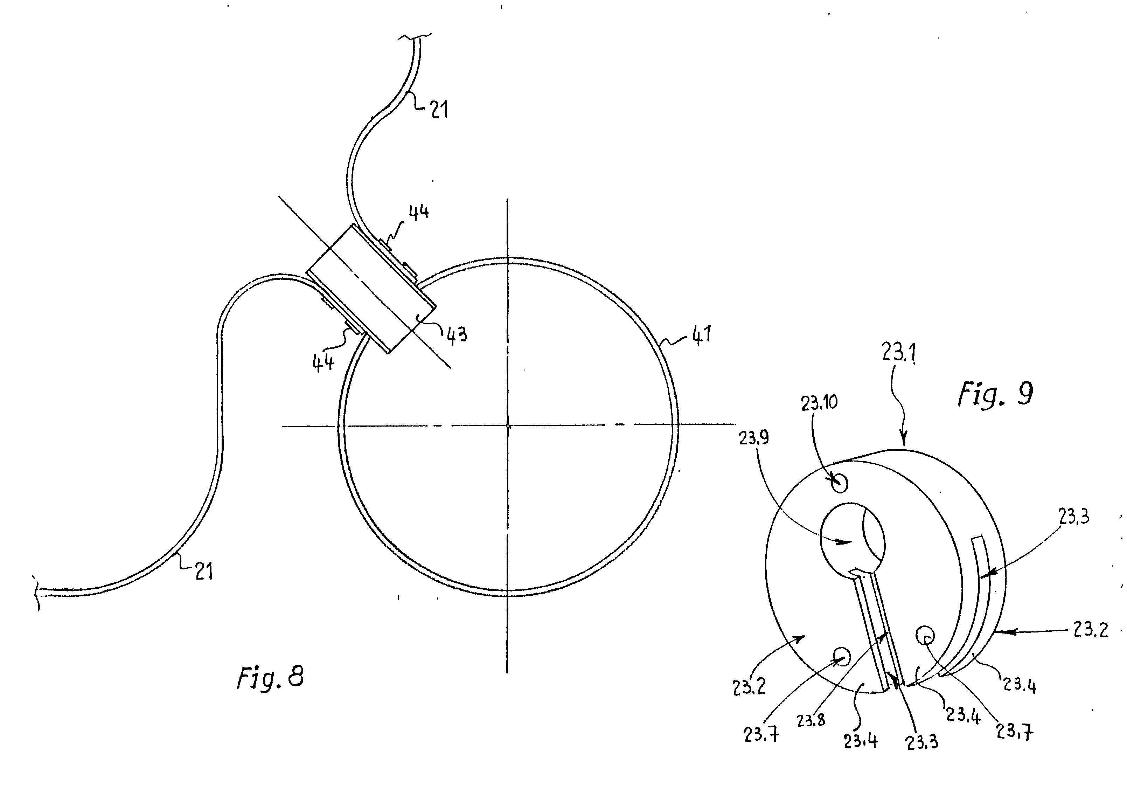

Bezugnehmend auf die Fig. 2 bis 9 umfasst die insgesamt mit 20 bezeichnete Abdeckung des erfindungsgemässen Treibhauses vor allem eine Mehrzahl von Druckluftschläuchen 21, deren Enden luftdicht versiegelt sind und die vorzugsweise aus durchsichtiger Kunststoff-Folie bestehen. Vorzugsweise sind die Druckluftschläuche 21, wie insbesondere aus Fig. 6 hervorgeht, mit ihren Längsseiten gruppenweise, z.B. jeweils in Gruppen von sechs Stück, mittels flexibler Längsbänder 22.1, 22.2 vorzugsweise aus Kunstharz, zur gegenseitigen Verbindung und Verstärkung bzw. zur gegenseitigen Abgrenzung und Verstärkung aneinander gefügt, je nachdem ob die Druckluftschläuche 21 jeder Gruppe aus einzeln geformten und dann längsseitig miteinander verbundenen Schäuchen bestehen, oder aber als einziger Folienschlauch it grossem Druchmesser gebildet und dann z.B. durch Extrusion der erwähnten flexiblen Längsbänder 22.1, 22.2 auf dem Folienschlauch in Längsrichtung unterteilt sind. Die Längsbänder 22.1 enthalten mittig in ihrer ganzen Länge ein Bewehrungsdraht oder eine Bewehrungsschnur aus Kunstfasern 22.3, wobei diese bewehrten Längsbänder 22.1 in jeder Gruppe von Schläuchen 21 abwechslungsweise mit Längsbändern 22.2 ohne Bewehrung aufeinander folgen. Wie dargestellt, sind für jeden Abschnitt 10.1, 10.2 des Treibhauses zur Bildung der Abdeckung 20 zwei Gruppen zu je sechs längsseitig durch insgesamt drei Längsbänder 22.1 und zwei Längsbänder 22.2 in abwechselnder Anordnung miteinander verbundenen Druckluftschläuche 21 vorgesehen. Diese Druckluftschläuche 21 erstrecken sich quer, d.h. entsprechend dem Verlauf der Querbögen 12 des Aufbaugerippes 10, von deren einem Ende zum anderen, und jede Gruppe von miteinander verbundenen Druckluftschläuchen 21 ist gegenüber den längs verlaufenden, am Geripge 10 befestigten Tragseilen 13 mit Hilfe von verschiebbaren Aufhängungsmitteln 23 (Fig. 2, 4) verstellbar. Diese Aufhängungsmittel 23 umfassen eine Mehrzahl von längs jedem Tragseil 13 aufeinander folgend angeordneten mittleren Aufhängeklemmen 23.1 und zwei äussere Aufhängeklemmen, d.h. eine erste Klemme 23.11 und eine letzte Klemme 23.12, die alle am selben Tragseil 13 verstellbar eingehängt sind. Jede mittlere bzw. Zwischenklemme 23.1 ist, wie besonders aus Fig. 6 und 9 ersichtlich, als exzentrische Ringscheibe vorzugsweise aus Kunstharz gebildet und mit in der Arbeitsstellung der Klemme 23.1 am Tragseil 13 im wesentlichen in Richtung auf die Längsachse des Treibhauses orientierten Schenkeln 23.2 versehen. Diese Schenkel 23.2 der Aufhängeklemme 23.1 weisen quer durchgehende, aufeinander ausgerichtete Schlitze 23.3 auf zur gegenseitigen Trennung der Schenkel 23.2 eines Paares von einander gegenüberliegenden Flügeln 23.4 (Fig.9).

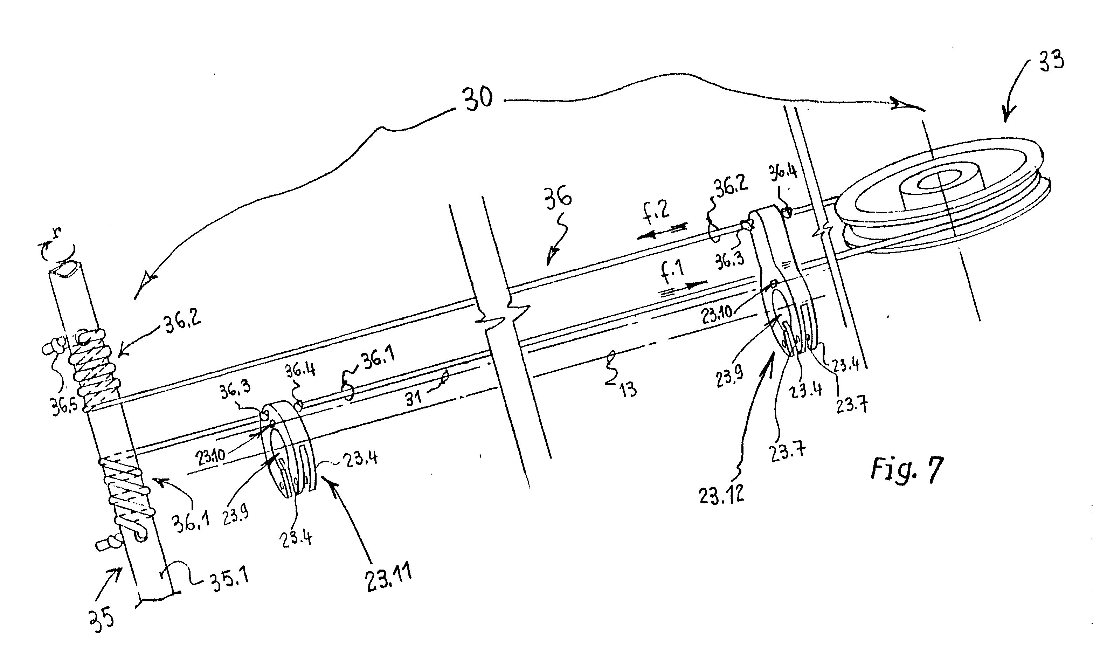

Die Flügel 23.4 eines jeden Paares sind elastisch biegsam und nach Art von Backen gegenseitig annäherber, wozu eine Spannschraube 23.5 (Fig. 6) dient, die durch koaxiale Bohrungen 23.7 im Bereich der freien Enden der Flügel 23.4 in Axialrichtung der Klemme 23.1 hindruchsteckbar und mittels einer Mutter 23.6 festsetzbar ist. Ein radialer durchgehender Einschnitt 23.8 (Fig. 9) zwischen den Schenkeln 23.2 der Aufhängeklemme 23.1 ist derart ausgebildet, dass die Klemme in leichter Weise an einem gespannten Tragseil 13 unter elastischer Auseinanderspreizung der Schenkel 23.2 eingehängt werden kann und zugleich ein Loslösen der Klemme vom Tragseil 13 verhindert ist. In Fig. 9 bezeichnet 23.9 des Auge der Klemme 23.1, in das der erwähnte Einschnitt 23.8 einmündet und in dem des Tragseil 13 aufgenommen wird. Ausserdem weist jede Aufhängeklemme 23.1 in ihrem mittleren, als Verbindungsbrücke für die Schenkel 23.2 dienenden Bereich in einer Linie mit dem erwähnten Auge und dem radialen Einschnitt eine durchgehende, im wesentlichen achsparallel zur Klemme 23.1 verlaufende Bohrung 23.10 (Fig. 9) auf. In der Reihenfolge der an jede Tragseil 13 eingehängten Klemmen 23 weisen die erste im Abschnitt 10.1 der vorderen Kopfseite T.1 nächstliegende Klemme 23.11 und die letzte im Abschnitt 10.2 der hinteren Kopfseite T.2 nächstliegende Klemme 23.12 einen brückenförmigen Oberteil von grösserer Höhe gegenüber jender der Zwischenklemmen 23.1 auf, wobei dieser Oberteil der letzten Klemme 23.12 erheblich höher ist als jener der ersten Klemme 23.11 (Fig. 7). Im Übrigen sind die endseitigen Klemmen 23.11 und 23.12 den Zwischenklemmen 23.1 ähnlich ausgebildet. Dem dargestellten Ausführungsbeispiel entsprechend, sind an jedem Tragseil 13 ausser den Endklemmen 23.11, 23.12 zehn verschiebbare Zwischenklemmen 23.1, d.h. fünf für jeden Abschnitt 10.1, 10.2 des Treibhauses, eingehängt.

An jedem Längsverlaufenden Tragseil 13 sind die durch flexible Längsbänder 22.1 verstärkten Bereiche der miteinander verbundenen Druckluftschläuche jeder Gruppe in Längsrichtung nach Art einer kopfgestellten U umgebogen und zwischen den einander zugeordneten Flügel 23.4 jeweils einer Klemme 23.1, 23.11, 23.12 eingeklemmt. Die Spannschrauben 23.5 der jeweiligen Klemme durchbohren das umgebogene flexible Band 22.1 unterhalb des Bewehrungsdrahtes bzw. der Bewehrungsschnur 22.3, der bzw. die sich in der Nähe des Auges 23.9 der Klemme befindet, ohne jedoch die Augöffnung irgendwie zu behindern.

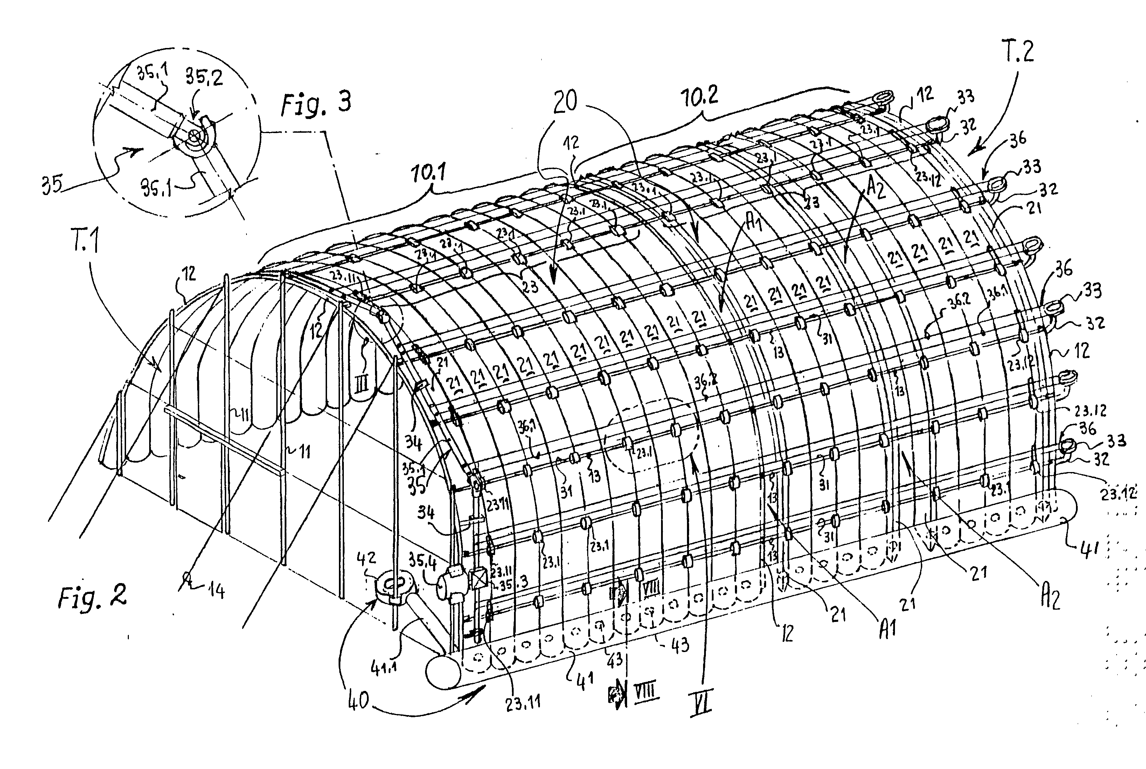

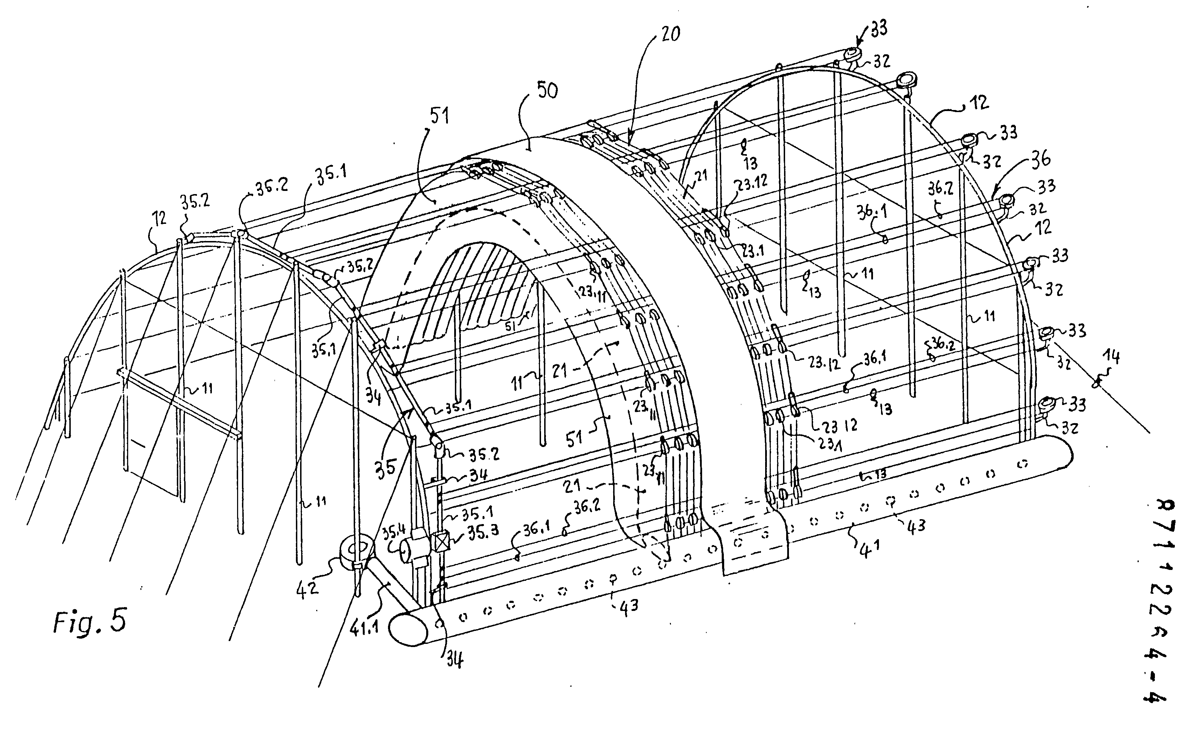

Die Mittel zu Verstellen der Druckluftschläuche 21 gegenüber bzw. längs den Tragseilen 13 sind in Fig. 7 allgemein mit 30 bezeichnet und umfassen Verbindungs-und Schleppseile 31 (Fig. 6), z.B. Kunstfaserseile, die alle längs eines einzelnen Tragseiles 13 verschiebbaren Aufhängeklemmen jedes Treibhausabschnittes 10.1, 10.2 miteinander verbinden. Diese Verbindungs-und Schleppseile 31 durchlaufen die Bohrung 23.10 der Klemmen 23.1, 22.11 und 23.12 und sind mittels vorderseitiger und rückseitiger Knoten 31.1, 31.2 (Fig. 6) an einer Verschiebung gegenüber jeder Klemme verhindert. Dadurch wird mittels der derart verknoteten Verbindungs-und Schleppseile 31 der gegenseitige Abstand zwischen den längs jedes Tragseiles 13 angeordneten Aufhängeklemmen und somit auch die grösste Entfaltung der mittels der Klemmen an den Tragseilen 13 hängenden und jeweils paarweise zwischen benachbarten Klemmen angeordneten Druckluftschläuchen 21 in der entfalteten Abdeckstellung bestimmt (Fig. 6). Die Verbindungs-und Schleppseile 31 sind am mittleren Querbogen 12 des Aufbaugerippes 10 des Treibhauses z.B. mittels Verknüpfung ihres einen freien Endes an diesem Querbogen befestigt. Auf der anderen Seite bei vollständig entfalteter Abdeckung 20 des Treibhauses werden die Verbindungs-und Schleppseile 31 vorzugsweise mit ihrem anderen freien Ende z.B. mittels Verknüpfung am Querbogen 12 des entsprechenden Kopfteiles des Treibhauses festgesetzt, wie in Fig. 2 gezeigt ist. (In den Fig. 4 und 5 der Zeichnung sind die Verbindungs-und Schleppseile 31 nicht dargestellt, während in Fig. 7 das Tragseil 13 und das Verbindungs-und Schleppseil 31 der grösseren Klarheit halber durch strichpunktierte Linien angedeutet sind). Ausserdem trägt der Querbogen 12 des hinteren Kopfteiles T.2 des Treibhauses auf den Tragseilen 13 jeweils entsprechender Höhe an der Aussenseite des Treibhausabschnittes 10.2 auf Winkelarmen 32 gehalterte Losscheiben 33 (Fig. 2, 4, 5, 7), die über dem betreffenden Querbogen 12 angeordnet sind und deren Drehachse im wesentlichen zur Achse des zugeordneten Tragseiles 13 normal verläuft. Auf der anderen Seite trägt der Querbogen 12 des vorderen Kopfteiles T.1 des Treibhauses mittels auf Stützarmen 34 angeordnete Lager eine rohrförmige Antriebswelle 35, die etwas oberhalb des Querbogens 12 verläuft und durch eine Mehrzahl von Rohrabschnitten 35.1 aus Metall zusammengesetzt ist (Fig. 3, 4, 5), wobei diese Rohrabschnitte nach Art einer gebrochenen Linie dem Verlauf des Querbogens 12 folgen und mittels Kardangelenke 35.2 (Fig. 3) untereinander in kinematischer Wirkverbindung stehen. Diese Welle 35 steht ihrerseits als Abtriebswelle mit einem Untersetzungsgetriebe 35.3 in kinematischer Wirkverbindung, wobei das Untersetzungsgetriebe durch einen Motor 35.4, beispielsweise einen Elektromotor, betätigbar ist und dieser Motor und das Untersetzungsgetriebe 35.3 in lösbarer Weise am Querbogen 12 gehaltert sind. Die Achsen der Rohrabschnitte 35.1 der Antriebswelle 35 liegen alle in einer zu den Achsen der längs verlaufenden Tragseile 13 normal stehenden Ebene.

Wie eindeutig aus Fig. 7 hervorgeht, ist neben jedem längs verlaufenden Tragseil 13 ein starkes Zugseil 36 z.B. aus Kunstfasern angeordnet, das um die dem betreffenden Tragseil 13 zugeordnete Losscheibe 33 umgelenkt wird und dessen Trume 36.1, 36.2 jeweils durch eine Bohrung im oberen Brückenteil grösserer Höhe der ersten Klemme 23.11 und der letzten Klemme 23.12 der am Tragseil 13 verschiebbaren Aufhängeklemmen hindurchgeführt sind. Die beiden Klemmen 23.11 und 23.12 sind mit dem zugehörigen Trum 36.1 bzw. 36.2 des Zugseiles 36 mittels beidseitiger Knoten 36.3 und 36.4, die am Zugseil 36 vorgesehen werden, fest und mit dem Zugseil selbst verschiebbar verbunden. Die Trume 36.1, 36.2 des Zugseils 36 sind mit ihrem jeweiligen freien Endabschnitt um die Antriebswelle 35 gewickelt und durch ein diametrales Loch in derselben hindurchgeführt sowie mittels eines Knotens 36.5 gegen Abzug gesichert.

Die Mittel zum Aufpumpen der Druckluftschläuche 21 sind in Fig. 2 allgemein mit 40 bezeichnet und umfassen eine starre beiderends geschlossene Rohrleitung 41, z.B. aus Kunstharz, die sich am Boden entlang einer Flanke des Aufbaugerippes 10 über die ganze Länge der Treibhausabschnitte 10.1, 10.2 erstreckt und an diesem Gerippe verankert ist. Diese Rohrleitung 41 ist über eine abtrennbare Zuleitung 41.1 mit einer Druckluftquelle 42 verbunden, die im Innern des Treibhauses angeordnet ist und z.B. aus einem Warmlufterzeuger mit einem druckseitigen Elektrolüfter zur Warmluftförderung und mit Heizwiderständen zur Lufterwärmung besteht. Die Rohrleitung 41 besitzt eine Mehrzahl von radiale Auslasstutzen 43, die seitlich an der Rohrleitung angereiht und gegen das Innere der Treibhausabschnitte 10.1, 10.2 gerichtet, in ihrer Anzahl und Anordnung den Druckluftschläuchen 21 der entfalteten Abdeckung 20 des Treibhauses entsprechen. Dabei besitzt jeder Druckluftschlauch 21 in seinem Endbereich nahe an der Rohrleitung 41 eine Lufteinlassöffnung, in die der zugeordnete Stutzen 43 eingesteckt werden kann. Fig. 8 zeigt im Einzelnen die luftdichte Verbindung eines Druckluftschlauches 21, der mit dem Mundstück seiner Lufteinlassöffnung auf dem zugeordneten Stutzen 43 gesteckt und mittels geeigneter Federringe 44 z.B. aus Gummi luftdicht gesichert ist.

Die Wände des vorderen und des hinteren Kopfteiles T.1 und T.2 des Treibhauses bestehen in herkömmlicher Weise z.B. aus durchsichtiger Kunststoff-Folie, die zwischen den Stützen 11 und dem Querbogen 12 eines jeden Abschnittes gespannt ist, wobei die Wand des vorderen Kopfteiles T.1 noch mit einer zweckentsprechend ausgeführten verschliessbaren Tür versehen ist.

Fig. 5 zeigt Schutzmittel gegen Witterungseinflüsse und Sonnenstrahlung, und zwar zum Schutze der im Bereich des mittleren Querbogens 12 des Treibhauses zusammengefalteten Druckluftschläuche 21. Diese Schutzmittel umfassen einen starren, gewölbeartig gebogenen Dachstreifen 50, der von den Stützen 11 des mittleren Querbogens 12 getragen ist und so das Treibhaus in Querrichtung umgibt. Ausserdem sind breite, gelochte, schwarze Folien z.B. aus Kunststoff, oder andere netzartige Flächengebilde 51 an den äusseren Aufhängeklemmen 23.11, 23.12 der Tragseile 13 zum Schutze der endseitigen Druckluftschläuche 21 der zusammengefalteten Abdeckung 20 des Treibhauses vorgesehen.

Betriebsweise:

Wie in Fig. 2 für den Treibhausabschnitt 10.2 gezeigt ist, lässt sich auch bei in entfalteter, das Treibhaus abdeckender Anordnung befindlicher Abdeckung 20 bei Bedarf eine wirksame Belüftung im Innern des erfindungsgemässen Treibhauses herbeiführen. Zu diesem Zwecke werden die Stutzen 43 der Rohrleitung 41 von den äusseren Druckluftschläuchen 21 der zwei Gruppen von jeweils sechs nebeneinander angeordneten und die Abdeckung z.B. des Treibhausabschnittes 10.2 bildenden Schläuche abgezogen. Durch die Entlüftung der äusseren Schläuche 21 werden in der Abdeckung des Abschnittes 10.2 hinreichend breite Queröffnungen z.B. A1, A2 gebildet, die sich über die gesamte Breite des Abschnittgewölbes erstrecken. (Der Druckluftschlauch 21 in unmittelbarer Nähe des hinteren Kopfteils T.2 ist in der Anfangsphase der Entlüftung dargestellt). Die Belüftung des Inneren des Treibhauses ist somit dadurch nach Bedarf einstellbar, dass mehr oder weniger äussere Druckluftschläuche 21 der einzelnen Gruppen vom Drucklufterzeuger 42 abgetrennt werden.

Soll nun das Treibhaus vollständig geöffnet werden, z.B. am Ende eines Bebauungszyklusses, damit der Erdboden mit Regenwasser versorgt oder ohne Bedachung bebaut werden kann, so wird der Drucklufterzeuger 42 abgestellt, alle Druckluftschläuche 21 werden von den Stutzen 43 der Rohrleitung 41 abgezogen und die Enden der Verbindungs-und Schleppseile 31 werden von den Querbögen 12 der Kopfteile T.1, T.2 gelöst. Nach der Entlüftung der Druckluftschläuche 21 wird der Motor 35.4 derart in Betrieb gesetzt, dass über das Getriebe 35.3 die Antriebswelle 35 entsprechend dem Pfeil r in Fig. 7, d.h. in Uhrzeigersinn, gedreht und so der Trum 36.1 der Zugseile 36 von der Antriebswelle 35 abgewickelt und der Trum 36.2 der Zugseile 36 auf die Antriebswelle 35 aufgewickelt wird. Dadurch werden alle äusseren Aufhängeklemmen 23.11 und 23.12, die mit dem Trum 36.1 bzw. 36.2 der Zugseile 36 fest verbunden sind, gleichzeitig mit dem Tragseil 13 im Sinne der gegenseitigen Annäherung gegen den mittleren Querbogen 12 hin entsprechend den Pfeilen f.1 und f.2 in Fig. 7, ausgehend von ihrer in den Bereichen des vorderen Kopfteiles T.1 und hinteren Kopfteiles T.2, bewegt. Bei dieser Verstellbewegung bewirken die äusseren Klemmen 23.11 und 23.12 in den zugeordneten Abschitten 10.1, 10.2 die gleichzeitige Verstellung auf dem Tragseil 13 aller Zwischenklemmen 23.1, die am selben Tragseil 13 hängen, sowie ihre Anhäufung gegen den mittleren Querbogen 12. So werden die Gruppen der miteinander verbundenen und an den Klemmen 23.11, 23.12, 23.1 festgehaltenen Druckluftschläuche 21 fortschreitend zusammengefaltet und ebenfalls gegen den mittleren Querbogen 12 des Treibhauses angehäuft, um dadurch in den zugeordneten Abschnitten 10.1, 10.2 die Stellung des Mindestraumbedarfs und der praktisch vollen Öffnung des Treibhauses einzunehmen. Die Fig. 4 und 5 zeigen die Abdeckung 20 des Treibhauses mit den beinahe ganz entlüfteten Druckluftschläuchen 21, wie diese zusammengefaltet und zum grossen Teil gegen den mittleren Querbogen 12 des Treibhauses hin angehäuft sind.

Umgekehrt wird vorgegangen, um die Abdeckung 20 von der angehäuften Stellung in die entfaltete Abdeckstellung zu verstellen. Hierzu wird die Welle 35 durch den Motor 35.4 in Gegehuhrzeigersinn gedreht, wodurch auch der Abwickel-und Aufwickelsinn der Trume 36.1 und 36.2 der Zugseile 36 in Bezug auf die Welle 35 umgekehrt wird, was auch die Umkehrung der Verstellrichtung der mit den Trumen 36.1 und 36.2 fest verknoteten Klemmen 23.11 und 23.12 entlang dem Tragseil 13 zur Folge hat, wobei sich die Klemmen fortschreitend voneinander entfernen. Zugleich werden entlang den Tragseilen 13 die Verbindungs-und Schleppseile 31, die mit den äusseren Klemmen 23.11 und 23.12 fest verbunden sind und auch alle auf dem Tragseil 13 verschiebbaren Zwischenklemmen 23.1 im zugeordneten Abschnitt 10.1, 10.2 des Treibhauses festhalten, fortschreitend in entgegengesetzte Richtungen gezogen und gespannt. Daher werden auch die Zwischenklemmen 23.1 in jedem Abschnitt durch die Seile 31 derart mitgeschleppt, dass sie sich am Tragseil 13 voneinander entfernen, bis sie den durch die Knoten 31.1, 31.2 zur Festlegung der Klemmen gegenüber den Verbindungs-und Schleppseilen 31 bestimmten maximalen Abstand erreichen. Nach erfolgter Entfaltung der Abdeckung 20 werden die freien Enden der Verbindungs-und Schleppseile 31 an den Kopfteilen T.1, T.2 des Treibhauses festgesetzt, um die Abdeckung 20 z.B. gegen Windkräfte zu sichern. Dann werden alle Druckluftschläuche 21 mit den Stutzen 43 der Rohrleitung 41 verbunden und letztere wird an den Erzeuger 42 von (wahlweise warmer oder kalter) Druckluft angeschlossen, wobei die Beaufschlagung mit Druckluft kontinuierlich oder intermittierend z.B. über eine Zeitschaltuhr oder einen Temperatursensor im Innern des Treibhauses gesteuert werden kann.

Auf Grund der vorstehenden Ausführungen weist das Treibhaus gemäss der Erfindung folgende Vorteile auf:

-die Abdeckung 20 des Treibhauses garantiert eine hohe Wärmeisolierung, die durch den Schlauchverband sichergestellt ist und noch dadurch erhöht werden kann, dass die Druckluftschläuche der Abdeckung mit auf konstantes Temperaturniveau einstellbarer Druckluft aufgepumpt werden können;

-die Abdeckung 20 hat ein geringes Gewicht und im entfalteten Zustand eine erhebliche Stabilität, und kann aufgrund der mit beliebigem Längenmass herstellbaren Druckluftschläuche 21 an grosse und auch unebene Bodenflächen angepasst werden;

-die Abdeckung 20 ist leicht aufstellbar und kann nach der Aufstellung in einfacher Weise nach Bedarf entfaltet oder zusammengefaltet werden; dies fördert auch die Lebensdauer der Abdeckung, wozu ebenfalls die Schutzmittel 50, 51 beitragen, und gestattet ausserdem die Bebauung des Treibhausbodens unter freiem Himmel;

-die Abdeckung 20 ermöglicht im mehr oder weniger entfaltetem Zustand eine bedarfsmässig einstellbare Belüftung des Innern des Treibhauses vorzunehmen.

Es versteht sich, dass in der praktischen Ausführung der Einzelteile zahlreiche Abwandlungen gegenüber dem beschriebenen Ausführungsbeispiel zulässig sind, ohne dass der beanspruchte Erfindungsbereich verlassen wird.

**Ansprüche**

1. Treibhaus, dadurch gekennzeichnet, dass die Abdeckung (20) des Treibhauses aus einer Mehrzahl von Druckluftschläuchen (21), aus gegenüber am Aufbaugerippe (10) fest angeordneten Tragelementen (13) verschiebbaren Mitteln (23) zum Aufhängen der Druckluftschläuche (21) und aus Mitteln (40) zum Aufpumpen der Druckluftschläuche (21) derart, dass diese unter Verschiebung gegenüber den erwähnten Tragelementen (13) in eine Abdeckstellung für das Treibhaus entfaltet werden können, wobei sich die Druckluftschläuche (21) in dieser Abdeckstellung im durch die genannten Mittel (40) aufgepumpten Zustand befinden, während sie bei Bedarf im entlüfteten Zustand in eine Mindestraumbedarfsanordnung der Offenstellung der Abdeckung des Treibhauses entsprechend zusammenfaltbar sind.

2. Treibhaus nach Anspruch 1, dadurch gekennzeichnet, dass die Druckluftschläuche (21) in Gruppen von mehreren nebeneinander angeordneten Druckluftschläuchen (21) mittels flexibler längs verlaufender Verstärkungsbänder (22.1, 22.2) miteinander verbunden sind.

3. Treibhaus nach Anspruch 1 oder 2, dadurch gekennzeichnet, dass sich die Druckluftschläuche (21) quer zum Treibhaus erstrecken und an längs verlaufenden, am Aufbaugerippe (10) des Treibhauses befestigten Tragseilen (13) durch verschiebbare Aufhängungsmittel (23) verstellbar aufgehängt sind, wobei diese Aufhängungsmittel eine Mehrzahl von C-förmig ausgebildeten, jedem Tragseil (13) entlang verschiebbaren Klemmen (23.11, 23.1, 23.12) umfassen, und die Schenkel (23.2) der Klemmen quer verlaufende, durchgehende und aufeinander ausgerichtete Trennschlitze (23.3) in jedem Schenkel (23.3) eines Paares von einander gegenüberliegenden, elastisch biegsamen Flügeln (23.4) aufweisen, und wobei letztere mittels einer durch koaxiale zur Klemme achsparallele Bohrungen (23.7) im freien Endbereich der Flügel (23.4) hindurchgeführter Spannschrauben (23.5) mit zugeordneter Mutter (23.6) backenartig aufeinander zu bewegbar sind.

4. Treibhaus nach Anspruch 2 und 3, dadurch gekennzeichnet, dass in jeder Gruppe von miteinander verbundenen Druckluftschläuchen (21) biegsame Längsbänder(22.1) mit einer mittig über die ganze Bandlänge verlaufenden Bewehrung aus Draht oder Schnur (22.3) und biegsame Längsbänder (22.2) ohne Bewehrung abwechselnd aufeinander folgen, und dass die durch diese Längsbänder (22.1) mit Bewehrung verstärkten Bereiche an jedem Tragseil (13) zwischen den gepaarten Flügeln (23.4) der Aufhängeklemmen (23.11, 23.1, 23.12) festgesetzt sind.

5. Treibhaus nach einem der Ansprüche 1 bis 4, dadurch gekennzeichnet, dass die Druckluftschläuche (21) gegenüber den Tragmitteln (13) durch Verstellmittel(30) in eine entfaltete Abdeckstellung für das Treibhaus und in eine zusammengefaltete Mindestraumbedarfsanordnung, der Offenstellung der Abdeckung entsprechend, verschiebbar sind.

6. Treibhaus nach Anspruch 5, dadurch gekennzeichnet, dass die Verstellmittel (30) Verbindungs-und Schleppseile (31) umfassen, und diese alle einem Tragseil (13) entlang verschiebbaren Aufhängeklemmen (23.11, 23.1, 23.12) jedes Treibhausabschnittes (10.1,10.2) verstellbar verbinden, wobei die Verbindungs-und Schleppseile (31) an der Endseite des zugeordneten Treibhausabschnittes (10.1, 10.2), gegen die die Abdeckung (20) in Anordnung des Mindestraumbedarfs zusammengefaltet wird, verankert sind.

7. Treibhaus nach Anspruch 6, dadurch gekennzeichnet, dass die Verstellmittel (30) ausserdem eine über einem Kopfteil (T.1) des Treibhauses angeordnete Antriebswelle (35), eine jedem längs verlaufenden Tragseil (13) entsprechend zugeordnete, über dem entgegengesetzten Kopfteil (T.2) des Treibhauses gelagerte Losscheibe (33) und ein parallel zu Tragseil(13) um die erwähnte Losscheibe (33) umgelenktes Zugseil (36) umfassen, wobei die beiden Trume (36.1, 36.2) dieses Zugseiles mit der ersten (23.11) und der letzten (23.12) der Aufhängeklemmen des Tragseiles (13) fest verbunden und daher mit diesen verstellbar sind, und ausserdem die beiden Trume (36.1, 36.2) des Zugseiles (36) jeweils ein freies Endstück aufweisen, das auf der Antriebswelle (35) aufgewickelt und an dieser befestigt ist.

8. Treibhaus nach Anspruch 7, dadurch gekennzeichnet, dass die Antriebswelle (35) von einem Motor (35.4) über ein Untersetzungsgetriebe (35.3) betätigbar ist.

9. Treibhaus nach einem der vorausgehenden Ansprüche, dadurch gekennzeichnet, dass die Mittel (40) zum Aufpumpen der Druckluftschläuche (21) eine längs einer Flanke des Treibhauses über die ganze Länge der Treibhausabschnitte (10.1, 10.2) verlaufende Rohrleitung (41) umfasst, die über eine abtrennbare Anschlussleitung (41.1) mit einem Drucklufterzeuger(42) verbunden ist und eine der Zahl und Anordnung der entfalteten Druckluftschläuche (21) der Abdeckung (20) entsprechende Mehrzahl von radialen Luftversorgungsstutzen (43) umfasst, wobei jeder Druckluftschlauch (21) luftdicht und lösbar mit dem zugeordneten Stutzen (43) über eine Lufteinlassöffnung verbunden werden kann.

10. Treibhaus nach einem der vorausgehenden Ansprüche, gekennzeichnet durch Schutzmittel gegen Witterungseinflüsse und Sonnenstrahlung, die zum Schutz der zusammengefalteten, gegen einen Endbereich jedes Abschnittes (10.1, 10.2) des Treibhauses verschobenen Druckluftschläuche (21) der Abdeckung (20) dienen und durch einen über dem genannten Endbereich jedes Abschnittes (10.1, 10.2) des Treibhauses gehalterten Dachstreifen (50) sowie durch schwarze gelochte Folien oder Beschattungsnetze (51) gebildet sind, wobei diese Folien oder Netze mittels der verschiebbaren Aufhängemittel der endseitigen Druckluftschläuche (21) in jedem Treibhausabschnitt (10.1, 10.2) zum Schutze diese endseitigen Schläuche (21) aufgehängt sind.

Fig. 1

Fig. 3

Fig. 2

Fig. 4

87112264-4

Fig. 5

20

21

22.1 21

31.1 23.1

31.2

23.2

23.2 23.4

23.3

23.4

31

13

31.1 23.1

31.2

23.3

23.6

23.6

22.1

22.3

23.7

.5 23.5

23.7

22.3

22.2

22.1

21

21

21

22.1 21

22.3

Fig. 6

0 260 480

8711226 4 - 4

Fig. 7

0 260 480

Fig. 8

Fig. 9

Europäisches Patentamt

EUROPÄISCHER RECHERCHENBERICHT

Nummer der Anmeldung

EP 87 11 2264

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 133 006 (SALES) <br> * Ansprüche 1-4,7; Abbildungen 1,2,7,8 * <br> --- | 1-3,5 | A 01 G 9/14 <br> A 01 G 9/22 |
| X | DE-A-2 017 184 (REIMER) <br> * Seite 2, Zeile 19 - Seite 3, Zeile 30; Ansprüche 1,4,7,10; Abbildungen 2-6,10 * | 1,2 | |
| Y | --- | 3-10 | |
| Y | NL-A-8 100 994 (MAARSE et al.) <br> * Ansprüche 1,2,4,6,7; Abbildungen 1-6; Seite 2, Zeile 1 - Seite 4, Zeile 35 * <br> --- | 3-8 | |
| Y | US-A-4 301 626 (DAVIS et al.) <br> * Abbildungen 1-6; Spalte 2, Zeile 28 - Spalte 3, Zeile 5 * <br> --- | 9 | |
| Y | GB-A-2 088 941 (BUNTING et al.) <br> * Abbildungen 5,8; Seite 2, Zeilen 2-19 * <br> --- | 10 | |
| A | EP-A-0 065 240 (MINIGRIP) <br> * Abbildungen 1-4; Ansprüche 1,2; Seite 10, Zeilen 7-25 * <br> --- | 2-4 | **RECHERCHIERTE SACHGEBIETE (Int. Cl.4)** <br><br> A 01 G |
| A | US-A-4 375 232 (HEESCHER) <br> * Abbildungen 1-4; Spalte 2, Zeile 24 - Spalte 3, Zeile 48 * <br> --- | 3-8 | |
| A | FR-A-2 504 847 (SIRI) <br> * Seite 6, Zeile 32 - Seite 3, Zeile 36; Abbildungen 1-3 * <br> --- | | |
| A | DE-A-2 223 158 (BETEILIGUNGS AG FÜR HAUSTECHNIK) <br> ---        -/- | | |

Der vorliegende Recherchenbericht wurde für alle Patentansprüche erstellt

| Recherchenort | Abschlußdatum der Recherche | Prüfer |
|---|---|---|
| DEN HAAG | 04-12-1987 | MEINDERS H. |

Europäisches
Patentamt

# EUROPÄISCHER RECHERCHENBERICHT

Nummer der Anmeldung

EP 87 11 2264

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 027 437 (MONSKY et al.) | | |

RECHERCHIERTE SACHGEBIETE (Int. Cl.4)

Der vorliegende Recherchenbericht wurde für alle Patentansprüche erstellt

| Recherchenort | Abschlußdatum der Recherche | Prüfer |
|---|---|---|
| DEN HAAG | 04-12-1987 | MEINDERS H. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
    Dokument

EPO FORM 1503 03.82 (P0403)